# EUROPÄISCHE PATENTSCHRIFT

(11) **EP 1 784 815 B1**
(45) Veröffentlichungstag und Bekanntmachung des Hinweises auf die Patenterteilung: **12.10.2011**
(21) Anmeldenummer: 05788553.5
(22) Anmeldetag: 13.08.2005
(51) Int. Cl.: G10K 11/16

(54) **EINRICHTUNG ZUR AKUSTISCHEN UND THERMISCHEN ABSCHIRMUNG**
ACOUSTIC AND THERMAL SHIELDING DEVICE
DISPOSITIF D'ISOLATION ACOUSTIQUE ET THERMIQUE

(30) Priorität: 17.08.2004 DE 102004039706
(43) Veröffentlichungstag der Anmeldung: 16.05.2007
(73) Patentinhaber: Haerle, Hans A., 73441 Bopfingen (DE)
(72) Erfinder: Haerle, Hans A., 73441 Bopfingen (DE)
(74) Vertreter: Lorenz, Markus
(86) Internationale Anmeldenummer: PCT/EP2005/008831
(87) Internationale Veröffentlichungsnummer: WO 2006/018258

(56) Entgegenhaltungen:
- DE-A1- 1 922 849
- DE-A1- 4 131 394
- DE-B3- 10 345 575
- DE-U1- 8 201 599
- US-A- 4 390 584

## Beschreibung

Die Erfindung betrifft eine Vorrichtung zur akustischen und thermischen Abschirmung mit einem plattenförmigen Element nach der im Oberbegriff von Anspruch 1 näher definierten Art.

Eine gattungsgemäße Vorrichtung ist aus der DE 19 22 849 A1 bekannt. Die dort beschriebene schallschluckende Verkleidung besteht aus einem Flechtwerk aus geschäumten Profilen, wobei Kette und/oder Schuss mit einer Federstahleinlage versehen sind.

Eine weitere derartige Vorrichtung ist in der US 4,309,584 beschrieben. Hierbei bestehen die Kett- und Schussfäden jeweils aus einer Vielzahl von Karbonfasern, die einen Durchmesser von wenigen Mikrometern aufweisen.

Eine Schalldämpferkulisse, die ein Schutzgewebe aus dünnen, Kettund Schussfäden bildenden Kunststofffäden besteht, ist in der DE 82 01 599 U1 beschrieben.

Aus der DE 91 07 484 U1 ist ein Hitzeschild zur Abschirmung von abgasführenden Teilen an einem Kraftfahrzeug bekannt, bei welchem eine von einem Trägerblech aus Aluminium getragene Isolierschicht eine Einlage aus einem regelmäßigen Maschenwerk aus Aluminium und mindestens eine Aluminium-Folie aufweist.

Ein weiteres Hitzeschild für Kraftfahrzeuge ist aus der DE 199 39 482 A1 bekannt. Hierbei ist das Hitzeschild als mikroperforiertes Blechformteil ausgebildet, wobei zwischen dem Hitzeschild und einer benachbarten Wand ein Hohlraum besteht.

In der DE 38 21 468 C2 ist ein Isolierformteil beschrieben, welches eine flexible Isoliermatte und einen flächigen, zum größten Teil mit der Isoliermatte bedeckten Träger aufweist.

Die DE 81 30 562 U1 beschreibt Schlauchgestricke für Auspufftöpfe, welche aus zwei Aluminiumschläuchen bestehen, von denen einer grobmaschig und der andere feinmaschig ist.

Aus der DE 199 52 689 A1 ist eine Schalldämmwand bekannt, welche eine Lochwand und eine Rückwand aufweist, welche über ihre Fläche durch eine Vielzahl von Klebepunkten miteinander verbunden sind.

Ein weiteres Schallabschirmelement ist aus der EP 1 161 360 B1 bekann. Hierbei ist eine Platte vorgesehen, welche eine Vielzahl kleiner Durchbrechungen aufweist, die zum Erreichen einer Platzersparnis eine bestimmte Größe sowie eine bestimmte Anordnung aufweisen.

Die DE 30 29 610 A1 beschreibt ein Schallschluckelement, das aus einem dreidimensionalen, textilen Flächengebilde mit einer Metallauflage auf seinen Fasern und/oder Fäden besteht. Des weiteren wird ein Verfahren zum Herstellen solcher Schallschluckelemente beschrieben, bei welchem Plüschgewebe oder Plüschgestricke metallisiert werden.

Sämtliche der bekannten Lösungen sind jedoch verhältnismäßig speziell, insbesondere sind sie nur in der Lage, entweder eine thermische oder eine akustische Schutzwirkung zu erzielen. Ein weiterer Nachteil ist die meist sehr aufwändige Herstellung der bekannten Elemente.

Die nicht vorveröffentlichte DE 103 45 575.2-53 beschreibt eine Vorrichtung zur akustischen und thermischen Abschirmung, welche ein plattenförmiges Element aufweist. Das plattenförmige Element weist wenigstens eine Schicht eines Metallgewebes mit Kettfäden und Schussfäden auf, welche an ihren Berührungspunkten durch versintern miteinander verbunden sind. Nachteil dieser Lösung sind die relativ hohen Kosten zur Herstellung der Vorrichtung.

Es ist daher Aufgabe der vorliegenden Erfindung, eine Vorrichtung zur akustischen und thermischen Abschirmung zu schaffen, welche mit einfachen und insbesondere kostengünstigen Mitteln hergestellt werden kann, welche zur Abschirmung von Bauteilen gegenüber thermischen und akustischen Einwirkungen flexibel einsetzbar ist und welche einen guten Zusammenhalt aufweist.

Erfindungsgemäß wird diese Aufgabe durch die in Anspruch 1 genannten Merkmale gelöst.

Der Erfinder hat überraschenderweise festgestellt, dass das plattenförmige Element der erfindungsgemäßen Vorrichtung zur akustischen und thermischen Abschirmung für die meisten Anwendungen auch dann eine ausreichende Festigkeit, insbesondere gegen ein selbständiges Auflösen des Gewebes, besitzt, wenn auf den sehr kostenintensiven Schritt des Versinterns der Berührungspunkte der Kettfäden mit den Schussfäden verzichtet wird. Dadurch lässt sich die gesamte Vorrichtung sehr viel kostengünstiger herstellen, sodass deren Marktchancen erheblich steigen.

Erfindungsgemäß weist das plattenförmige Element ein mit Poren versehenes Metallgewebe auf, bei welchem die Poren aufgrund der sich darin befindlichen Luft als Wärmeisolator wirken und somit eine thermische Abschirmung bieten. Die Wärmeisolierung wird also durch die mit Luft oder Gas gefüllten Poren innerhalb des Metallgewebes verursacht. Hierbei ist die Wärmeisolation des Gewebes umso besser, je mehr Poren sich in dem Gewebe befinden bzw. je größer die Porosität ist. Eine bessere Wärmeisolation ergibt sich auch, je kleiner der Drahtdurchmesser ist und je mehr Lagen das Gewebe aufweist. Auch die Dichte des Gewebes kann die Wärmeisolation beeinflussen, wobei eine geringere Dichte die Wärmeisolation verbessert. Des weiteren lässt sich der Wärmeisolationsgrad des Gewebes erhöhen, indem für die Kett- und Schussfäden ein Werkstoff mit einer schlechten Wärmeleitung verwendet wird.

Außerdem sorgen die Poren für eine Absorption des in diese Poren gelangenden Schalls, sodass die Schallschnelle-Energie des Schalls in wärmeenergie umgewandelt und der Schall gedämpft wird. Auf diese Weise bildet die erfindungsgemäße Vorrichtung einen akustisch wirksamen Absorber. Hierbei steht der Strömungswiderstand des Gewebes in Funktion zur Schallabsorption, wobei ein höherer Strömungswiderstand eine bessere Schallabsorption erzeugt. Wenn ein Gewebe mit einer guten Wärmeleitfähigkeit verwendet wird, wird die Wärmeenergie innerhalb der Druckamplitude der Schallwelle schnell abgeleitet und somit absorbiert. Eine Verringerung der Porengröße bzw. des Abstandes der Schuss- und/oder Kettfäden ermöglicht ebenfalls eine Verbesserung der Schallabsorption. Hierbei erfährt die Schallwelle durch die Strömungsumlenkungen innerhalb des Gewebes einen Widerstand, der die Schallabsorption verursacht. Diejenigen Schallwellen, die nicht in das Gewebe eindringen, erfahren durch die Kett- und/oder Schußfäden eine diffuse Reflexion.

Hierbei ist je nach Anforderung ein Kompromiss zwischen der Wärmeisolierung und der Schallabsorption zu suchen.

Der besondere vorteil in der verwendung eines Gewebes für das plattenförmige Element liegt dabei darin, dass ein Gewebe erheblich einfacher und schneller hergestellt werden kann als dies beispielsweise bei Maschenware der Fall ist. Ein weiterer Vorteil ergibt sich daraus, dass für ein Gewebe sehr dünne Drähte verwendet werden können, so dass es möglich ist, äußerst dünne und damit entsprechend flexible plattenförmige Elemente zu bilden. Diese Flexibilität ist dann von Vorteil, wenn die erfindungsgemäße Vorrichtung an bestimmte Wärme und/oder Schall abstrahlende Bauteile, insbesondere im Motorraum eines Kraftfahrzeugs angepasst werden soll.

Selbstverständlich kann die erfindungsgemäße Vorrichtung auch dann eingesetzt werden, wenn lediglich eine akustische oder eine thermische Abschirmung vonnöten ist.

Die durch das Walzen verringerte Dicke des Metallgewebes beeinflusst die Porosität desselben, wobei sich bei einer geringeren Dicke eine entsprechend verringerte Porosität ergibt. Dadurch lässt sich wiederum der Schallwiderstand der erfindungsgemäßen Vorrichtung beeinflussen, wodurch diese an verschiedene Frequenzen angepasst werden kann. Des weiteren ergibt sich durch eine Veränderung der Dicke des Metallgewebes auch eine Erhöhung der Berührungsfläche zwischen den Kett- und den Schussfäden, sodass auf diese Weise auch Einfluss auf die Wärmeleitfähigkeit des Metallgewebes genommen werden kann. Des weiteren kann durch das Walzen auch der Strömungswiderstand des Gewebes eingestellt werden.

Ein verbesserter Korrosionsschutz für die erfindungsgemäße vorrichtung lässt sich erreichen, wenn die Kettfäden und/oder die Schussfäden in einer vorteilhaften Ausführungsform galvanisch behandelt oder lackiert sind.

Alternativ kann auch vorgesehen sein, dass das Metallgewebe galvanisch behandelt oder lackiert ist.

Durch die galvanische Behandlung oder das Lackieren des Metallgewebes kann außerdem auch eine weitere Erhöhung der Festigkeit desselben erreicht werden, da hierdurch die Berührungspunkte zwischen den Kett- und den Schussfäden zusätzlich versteift werden.

Aus den unabhängigen Ansprüchen 5 - 8 ergeben sich verschiedene vorteilhafte Verwendungen der erfindungsgemäßen Vorrichtung.

Eine verfahrensgemäße Lösung der Aufgabe ist den Merkmalen von Anspruch 9 zu entnehmen. Mit dem dort beschriebenen Verfahren lässt sich die erfindungsgemäße Vorrichtung mit dem das Metallgewebe aufweisenden plattenförmigen Element in einfacher Weise herstellen. Besonders vorteilhaft ist es, dass erfindungsgemäß die Dicke des Metallgewebes durch Walzen verringert wird.

Das walzen des Metallgewebes hat den oben nicht erwähnten, erheblichen Vorteil, dass das Gewebe mechanisch gefügt wird, insbesondere dass die Schussfäden in die Kettfäden eingepresst werden und umgekehrt, sodass sich eine sehr gute Verklammerung des Gewebes ergibt und dieses einen erheblich verbesserten Zusammenhalt und eine gesteigerte Festigkeit erhält. Dies ist vor allem dann wichtig, wenn die erfindungsgemäße Vorrichtung nach dem Weben mit größeren Umformgraden umgeformt werden soll. Durch das Walzen erhält das Gewebe darüber hinaus eine Spannung, wodurch die Eigenfrequenz desselben eingestellt werden kann.

Wenn in einer weiteren vorteilhaften Ausgestaltung der Erfindung zum Walzen des Metallgewebes wenigstens eine strukturierte Walze verwendet wird, so lässt sich eine raue, genoppte oder wellige Oberfläche des Metallgewebes erreichen, durch welche die Schallabsorption und - reflexion beeinflusst werden kann.

Vorteilhafte Ausgestaltungen der Erfindung sind in den Unteransprüchen angegeben. Nachfolgend werden Ausführungsbeispiele der Erfindung anhand der Zeichnung prinzipmäßig beschrieben.

Es zeigt:
- Fig. 1: eine Draufsicht auf eine erste Ausführungsform der erfin- dungsgemäßen Vorrichtung zur thermischen und akustischen Abschirmung;
- Fig. 2: eine Ansicht gemäß dem Pfeil II aus Fig. 1;
- Fig. 3: einen Schnitt nach der Linie III - III aus Fig. 1;
- Fig. 4: eine Draufsicht auf eine zweite Ausführungsform der erfin- dungsgemäßen Vorrichtung zur thermischen und akustischen Abschirmung;
- Fig. 5: einen Schnitt nach der Linie V - V aus Fig. 4;
- Fig. 6: einen Schnitt nach der Linie VI - VI aus Fig. 4;
- Fig. 7: einen Schussfaden eines gewalzten Gewebes im demontierten Zustand;
- Fig. 8: einen Kettfaden eines gewalzten Gewebes im demontierten Zu- stand;
- Fig. 9: den Schalldurchgang durch ein ungewalztes Gewebe;
- Fig. 10: den Schalldurchgang durch ein gewalztes Gewebe;
- Fig. 11: eine Darstellung gemäß Fig. 3, in der eine Durchgangspore detaillierter dargestellt ist;
- Fig. 12: eine Darstellung gemäß Fig. 2, in der ein Porenraum detail- lierter dargestellt ist und
- Fig. 13: ein Beispiel eines aus der erfindungsgemäßen Vorrichtung gebildeten Werkstücks.

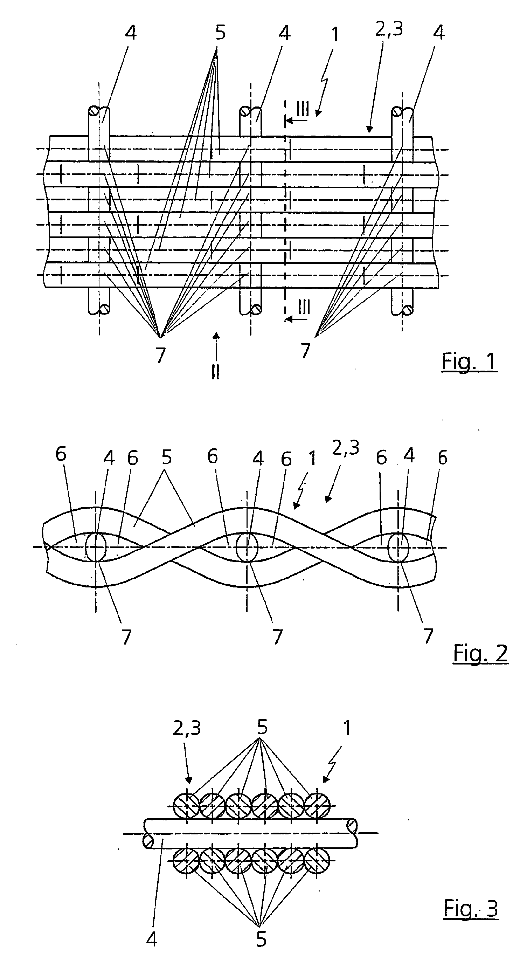

Fig. 1 zeigt eine Draufsicht auf eine Vorrichtung 1 zur akustischen und thermischen Abschirmung mit einem plattenförmigen Element 2, welches eine Schicht eines Metallgewebes 3 aufweist bzw. im wesentlichen aus dem Metallgewebe 3 besteht. Zusätzlich zu dem metallgewebe 3 kann das plattenförmige Element 2 auch noch weitere, nicht dargestellte Schichten aufweisen. Das Metallgewebe 3 weist Kettfäden 4 und im wesentlichen senkrecht zu den Kettfäden 4 verlaufende Schussfäden 5 auf. Das Metallgewebe 3 weist des weiteren Poren 6 auf, welche sich zwischen den Kettfäden 4 und den Schussfäden 5 befinden und in der Darstellung gemäß Fig. 2 zu erkennen sind. Die Poren 6 des Metallgewebes 3 dienen dazu, die Schallschnelle-Energie des auf das plattenförmige Element 2 auftreffenden Schalls in wärme umzuwandeln und auf diese Weise die Schallwellen zu absorbieren.

Um besondere Erfordernisse zu erfüllen, können auch profilierte Drähte als Kettfäden 4 und Schussfäden 5 eingesetzt werden. Hierbei können gegebenenfalls unterschiedliche Profile verwendet werden.

Die Vorrichtung 1 kann beispielsweise in Motorräumen von Brennkraftmaschinen zur akustischen Abschirmung von Schall abstrahlenden Bauteilen jeglicher Art verwendet werden. Weitere Möglichkeiten zur Verwendung der Vorrichtung 1 ergeben sich im Inneren von Schalldämpfern und Abgasanlagen, als Trägermaterial für Motorabdeckungen, als Trägermaterial für dämpfende Dichtungen, als Blech für Helmholtz-Resonatoren ohne und mit Zusatzdämpfung, als Helmholtz-Resonatoren mit Folienabdeckung, als Abdeckung für Helmholtz-Resonatoren, als elastische Widerstandsfolien, als Wärmeisolierung von Backöfen, Toastern oder sonstigen Haushaltsgeräten, als Schallabschirmung von Antriebsmotoren für Waschmaschinen und sonstigen Haushaltsgeräten, als Schallabsorptionsmaterial für Kompressoren, beispielsweise bei Kühlschränken, als Auskleidung von Strömungskanälen und Ansaugkanälen von Turbinen, Kraftfahrzeugmotoren, Heizungen, Kompressoren und dergleichen, als Auskleidung von Schalldämpfern, als Zwischenwand oder Innenrohr von Schalldämpfern, als Decklage für Schallschutzkabinen, Schallwände oder Schallkapseln, als schallabschirmung für Antriebsmotoren aller Art, als schallabsorbierende Gehäuse oder als Platten- und Membran-Absorber. Um eine Anpassung des plattenförmigen Elements 2 an die verschiedensten Formen von abzuschirmenden oder daraus hergestellten Bauteilen zu erreichen, ist es möglich, dass das plattenförmige Element 2 als Lochblech, als Schlitzblech oder als Streckmetall ausgebildet ist. Des weiteren kann das plattenförmige Element 2 durch Umformen, beispielsweise durch Tiefziehen, in eine an das abzuschirmende Bauteil angepasste Form gebracht werden. Das plattenförmige Element 2 kann zu einem selbsttragenden Bauteil umgeformt werden, es ist möglich, dasselbe durch Sicken und Bördel zu versteifen. Des weiteren kann das plattenförmige Element 2 durch Tiefziehen, Prägen und/oder Stanzen zu Hauben, Schalen, Töpfen, Trichter und ähnlichen Bauteilen umgeformt werden. Aus dem plattenförmigen Element 2 können Profile, wie z.B. Hutprofile, Kastenprofile, Winkelprofile usw., geformt werde. Außerdem können aus dem plattenförmigen Element rohrförmige Profile mit rundem, ovalem, rechteckigem, dreieckigem oder anderem beliebigen Querschnitt hergestellt werden. Das plattenförmige Element kann gefaltet, genoppt, gelocht oder mit Kragendurchzügen versehen werden. Wenn mehrere Lagen desselben oder auch unterschiedlicher plattenförmiger Elemente 2 verwendet werden, lassen sich hieraus mehrlagige Hauben oder Schalen mit unterschiedlichen Gewebedichten und -kombinationen herstellen. Das plattenförmige Element 2 kann mit anderen schallabsorbierenden Medien beschichtet oder belegt werden, wie z.B. Keramikvlies, Basaltwolle, organische wolle, Blechfolien oder dicke Bleche. Des weiteren kann das plattenförmige Element 2 oder die daraus hergestellten Bauteile mit mikroperforierten Folien, mit Lochblechen oder mit Streckmetallen kombiniert werden, um bessere Effekte hinsichtlich der Schallabsorption zu erhalten. Zum Abbauen der Schallenergie kann auch vorgesehen sein, dass das plattenförmige Element 2 bzw. ein daraus hergestelltes Bauteil durch die Beschallung zum Schwingen angeregt und somit die Schallenergie abgebaut wird.

Neben der Absorption von Schall dient die Vorrichtung 1 auch zur thermischen Abschirmung, insbesondere wiederum zur Verwendung an bzw. in Verbindung mit Bauteilen von Brennkraftmaschinen, wie z.B. Auspuffkrümmern, Abgasleitungen, Turboladern, Katalysatoren oder anderen wärmeabstrahlenden Bauteilen. Hierzu bilden die Poren 6 zwischen den Kettfäden 4 und den Schussfäden 5 Luftpolster, die für die notwendige thermische Isolierung sorgen. Die Wärmeleitfähigkeit des plattenförmigen Elements 2 ergibt sich durch die Berührung der Kettfäden 4 mit den Schussfäden 5 an jeweiligen Berührungspunkten 7, wobei die Wärmeleitfähigkeit umso besser ist, je größer diese Berührungspunkte 7 sind. Das plattenförmige Element 2 weist aufgrund seiner Ausführung als Metallgewebe 3 des weiteren eine große Kühloberfläche auf, sodass es in der Lage ist, die darauf einwirkende Wärme schnell abzuführen.

Zur Herstellung des Metallgewebes 3 werden die Kettfäden 4 und die Schussfäden 5 mit einem an sich bekannten Webverfahren, wie zum Beispiel einem Webverfahren zum Herstellen einer glatten Tresse oder einer Köperbindung, miteinander verwebt, wobei hervorzuheben ist, dass annähernd alle bekannten Webverfahren eingesetzt werden können. Durch eine bestimmte webart lassen sich auf beiden Seiten des Gewebes unterschiedliche Strukturen, beispielsweise eine glatte und eine raue Struktur, erzielen. Durch die Oberflächenrauigkeit des Gewebes 3 kann die Schallabsorption beeinflusst werden, wobei durch eine rauere Oberfläche eine bessere Schallabsorption erreicht werden kann, da die Schallwellen stärker abgelenkt werden. Weitere mögliche Gewebearten sind glatte Bindung, Spitz- und Wechselköper, Fünfschaftköper, Köpertresse, Duplex, Panzertresse, Breitmaschenköpertresse oder ein Gewebe mit Metallfaservlies, wobei durch die Wahl der Gewebeart die Größe der Poren 6 beeinflusst werden kann. Des weiteren können auch die Kettfäden 4 und/oder die Schussfäden 5 vor dem weben mit einer Zink- oder Mangan-Phosphatschicht versehen werden. Die Oberflächenrauigkeit des Gewebes 3 kann durch Phosphatieren oder Beschichten mit Keramik oder einem Pulver aus Kohlenstoff, Kunststoffen oder Metallpulver erzeugt werden.

Der Werkstoff der Kettfäden 4 und der Schussfäden 5 kann beispielsweise ein Stahlwerkstoff, ein Kupferwerkstoff oder ein Aluminiumwerkstoff sein. Weitere mögliche Werkstoffe für die Kettfäden 4 und die Schussfäden 5 sind prinzipiell alle Edel-, Schwer- und Leichtmetalle, insbesondere auch Federstahl und Edelstahl sowie Leichtmetalllegierungen. Vorzugsweise bestehen die Kettfäden 4 und die Schussfäden 5 aus demselben Material, es kann jedoch auch unterschiedliches Material verwendet werden.

Wenn ein Aluminiumwerkstoff für die Kettfäden 4 und die Schussfäden 5 verwendet wird, so ergibt sich ein sehr leichtes plattenförmiges Element 2, wobei auch eine gute Wärmeleitfähigkeit und eine gute Umformbarkeit gegeben sind. Gerade bei einem Aluminiumwerkstoff hat es sich gezeigt, dass durch eine Verringerung der Dicke des Gewebes 3, vorzugsweise durch Walzen in einer Kalanderwalze oder dergleichen, die Festigkeit und der Zusammenhalt des Gewebes 3 erheblich erhöht werden kann.

Im vorliegenden Ausführungsbeispiel weisen die Kettfäden 4 und die Schussfäden 5 im wesentlichen denselben Durchmesser auf, d.h. es ergeben sich maximale Unterschiede von 0,01 - 0,5 mm. Selbstverständlich können die Kettfäden 4 und die Schussfäden 5 auch erheblich unterschiedlichere Durchmesser aufweisen. Prinzipiell sind jedoch sämtliche Drahtdicken möglich.

Um einen besseren zusammenhalt der Kettfäden 4 mit den Schussfäden 5 an den Berührungspunkten 7 zu erreichen, kann das Gewebe 3 nach seiner Herstellung oder nach seiner Umformung galvanisch behandelt werden. Auf diese weise lässt sich beispielsweise ein aus einem relativ einfachen und damit kostengünstigen Stahlwerkstoff bestehendes Gewebe 3 verzinken, vernickeln, verkupfern, aluminieren oder mit einem anderen geeigneten Werkstoff galvanisch überziehen. Auf diese Weise können Kosten eingespart werden, in dem ein billigeres Material für die Kettfäden 4 und die Schussfäden 5 verwendet wird, welches anschließend mit einem galvanischen Überzug versehen wird. Des weiteren ergibt sich auf diese Weise eine zusätzliche versteifung des Gewebes 3. Alternativ können auch galvanisch behandelte oder lackierte Kettfäden 4 und Schussfäden 5 zur Herstellung des Gewebes 3 verwendet werden. Dabei steht dann der Korrosionsschutz des Gewebes 3 im Vordergrund, der selbstverständlich auch durch die galvanische Beschichtung des gesamten Gewebes 3 gegeben ist.

Eine Alternative zur galvanischen Behandlung stellt das Lackieren des Metallgewebes 3 dar, was vor allem dann angewendet werden kann, wenn die Vorrichtung 1 keiner thermischen Beanspruchung ausgesetzt ist. Vorzugsweise wird hierzu das Metallgewebe 3 in ein Lackbad getaucht. Der Lack legt sich dabei insbesondere an den Berührungspunkten 7 an und wird durch Kapillarwirkung in die Ecken der Poren 6 gezogen, sodass diese verkleinert werden. Auf diese Weise wird nicht nur die Größe der Poren 6 verringert, was wiederum einen Einfluss auf die Schallabsorption durch das Metallgewebe 3 hat, sondern es ergibt sich dadurch auch eine erhöhte Steifigkeit des gesamten Metallgewebes 3 durch den verbesserten Zusammenhalt im Bereich der Berührungspunkte 7.

Wenn, wie oben beschrieben, das plattenförmige Element 2 umgeformt wird, so ist es sinnvoll, die galvanische Behandlung oder die Lackierung nach dem Umformen vorzunehmen, um eine Beschädigung des galvanischen überzugs bzw. der Lackschicht zu verhindern.

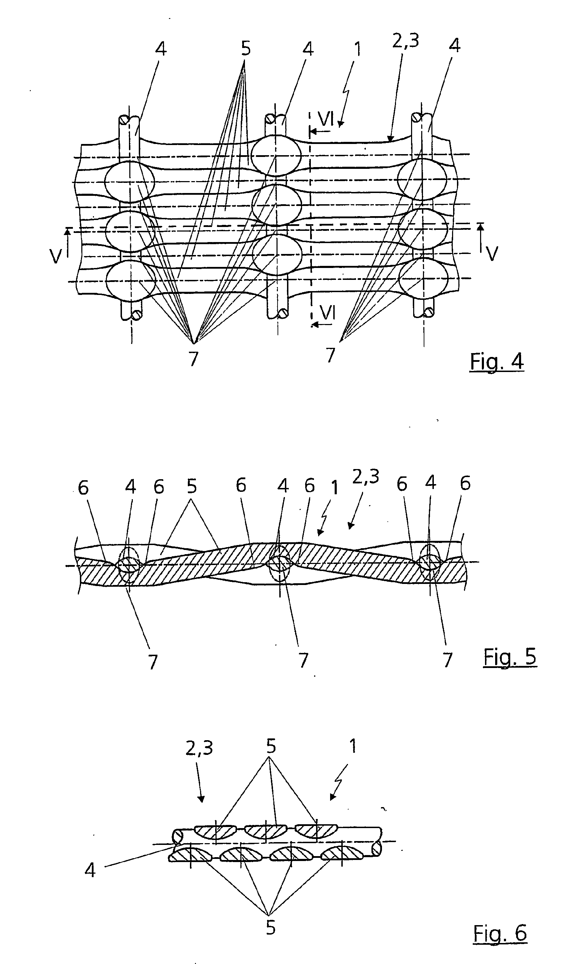

In den Figuren 4 bis 6 ist eine Ausführungsform der erfindungsgemäßen Vorrichtung 1 mit dem das Metallgewebe 3 aufweisenden plattenförmigen Element 2 dargestellt, bei dem das Metallgewebe 3 nach dem Weben gewalzt wurde. In der Draufsicht gemäß Fig. 4 ist zu erkennen, dass durch dieses Walzen die Berührungspunkte 7 zwischen den Kettfäden 4 und den Schussfäden 5 stark abgeflacht sind, sodass sich insgesamt eine verringerte Dicke des Metallgewebes 3 ergibt. Alternativ kann die Presskraft auch durch Pressen des Metallgewebes 3 in einem Gesenk aufgebracht werden. Des weiteren ist es möglich, dass das Metallgewebe 3 durch Aufbringen der Presskraft pressgeschweißt wird. Beispielsweise kann durch das Walzen ein Gewebe 3, das zuvor eine Dicke von ca. 1,4 mm aufwies, auf eine Dicke von ca. 0,4 mm gebracht werden.

Nach dem Walzen oder Pressen des Gewebes 3 auf eine entsprechende Dicke kann dasselbe phosphatiert, lackiert oder galvanisch oder in einem Schmelzbad einen Überzug erhalten oder es kann eine keramische Schicht oder Kohlefasern auf das Gewebe 3 aufgetragen werden. Eine weitere Möglichkeit zur Behandlung des Gewebes 3 besteht darin, dass auf dasselbe nach dem Walzen oder Pressen auf Dicke metallische Fasern oder Pulver aufgespritzt oder gesintert werden, die beispielsweise aus demselben Werkstoff wie das Gewebe 3 selbst bestehen können. Aus dem Schnitt gemäß Fig. 5 geht hervor, dass auch die Poren 6 zwischen den Kettfäden 4 und den Schussfäden 5 einen erheblich kleineren Querschnitt als bei der Ausführungsform gemäß der Figuren 1 bis 3 aufweisen, was zu einer Veränderung der Schallabsorption durch das Metallgewebe 3 führt. Je nach Umformgrad beim Walzen kann somit der Schallwiderstand des Metallgewebes 3 eingestellt werden.

Aus einem Vergleich von Fig. 6 mit Fig. 3 wird deutlich, dass die Schussfäden 5 durch das Walzen beidseitig in die Kettfäden 4 eingedrungen sind, wobei sowohl die Kettfäden 4 als auch die Schussfäden 5 verformt wurden. Es ist ersichtlich, dass sich durch dieses mechanische Fügen eine erheblich verbesserte Verklammerung der Kettfäden 4 mit den Schussfäden 5 und somit eine erheblich erhöhte Festigkeit bzw. Steifigkeit des Metallgewebes 3 ergibt. Durch das Walzen oder Pressen des Gewebes kommt es zu einer vertikalen und horizontalen Verdichtung des Gewebes 3. Auch im gewalzten Zustand sind jedoch noch gewisse, wenn auch erheblich geringere Bewegungen zwischen den Kettfäden 4 und den Schussfäden 5 möglich, sodass Schallenergie abgebaut werden kann. Das Walzen oder Pressen des Gewebes 3 kann so durchgeführt werden, dass ein blechartiger Charakter des plattenförmigen Elements 2 entsteht, wobei stets eine gewisse Porosität verbleibt. Das verdichtete Gewebe 3 lässt sich sehr gut schneiden, stanzen, bördeln und tiefziehen, wobei ein Tiefziehverhältnis von bis zu 1,8 erreicht werden kann. Des weiteren kann das Gewebe 3 mittels unterschiedlicher schweißverfahren, wie z.B. Punkt- und Rollnahtschweißen, sowie sämtlicher Schmelzschweißverfahren weiterverarbeitet werden. Ein weiterer Vorteil des Walzens oder Pressens des Gewebes 3 ist darin zu sehen, dass die außenliegenden Drähte bzw. Fäden sich bei eventuellen Zuschnitten nur schwer bzw, nicht ablösen, da sich durch das Walzen bzw. Pressen eine Verdichtung ergibt.

Um eine Strukturierung der Oberfläche des Metallgewebes 3 zu erzielen, können beim Walzen des Metallgewebes 3 eine oder auch beide verwendeten Walzen eine raue Oberfläche aufweisen, die sich auf das Metallgewebe 3 abbildet. Hierdurch lässt sich die Streuung des auf das Metallgewebe 3 auftreffenden Schalls verändern. Vor dem Weben können sowohl die Kettfäden 4 als auch die Schussfäden 5 in radialer und/oder axialer Richtung aufgeraut werden, um die Schallabsorption zu verbessern. Wenn das Gewebe 3 zugeschnitten wird, können die Kanten der Zuschnitte durch Bördeln derselben versteift werden, wodurch die Verletzungsgefahr vermindert wird. Alternativ oder zusätzlich ist es auch möglich, die Kanten der Zuschnitte durch Trennschneiden, beispielsweise mittels eines Laserstrahls, zu verschmelzen.

Die Steifigkeit des Gewebes 3 kann durch die Anzahl und den Durchmesser der Kettdrähte 4 verändert werden. Prinzipiell sind für die Kettfäden 4 und die Schussfäden 5 sämtliche Drahtformen, wie z.B. rund, eckig, oval, usw., möglich, wobei in ein und demselben Gewebe 3 auch unterschiedliche Drahtformen zum Einsatz kommen können. In Fig. 2 ist des weiteren zu erkennen, dass die Poren 6 beidseits der Kettfäden 4 am größten sind. Von den Schussfäden 5 aus betrachtet, befindet sich die größte durchgängige Pore 6 zwischen den oberen und unteren Schussfäden 5, was ebenfalls aus Fig. 2 hervorgeht. Zwischen den in Fig. 2 dargestellten beiden Schussfäden 5 und dem Kettfaden 4 bildet sich also ein dreieckiger Raum, der in der vorliegenden Patentanmeldung als Pore 6 bezeichnet wird und sich insbesondere bei den Gewebearten glatte Tresse, Köpertresse, Duplex, Betamesh und Robuster als besonders schallschluckend erwiesen hat. Durch die Umlenkung der Schallwellen entlang der Poren 6 an den Kettfäden 4 entsteht ein Helmholzeffekt, durch welchen die Schallwellen absorbiert werden. Eine stärkere Umformung des Gewebes 3 führt dabei zu einer dünneren Pore 6.

Wenn mehrere Gewebelagen verwendet werden, so können diese lose aufeinanderliegen oder festen Kontakt zueinander aufweisen. Dieser feste Kontakt kann beispielsweise durch Verschweißen, verschrauben, Vernieten oder dergleichen hergestellt werden, wobei die einzelnen Lagen in einem gemeinsamen Rahmen angeordnet werden können.

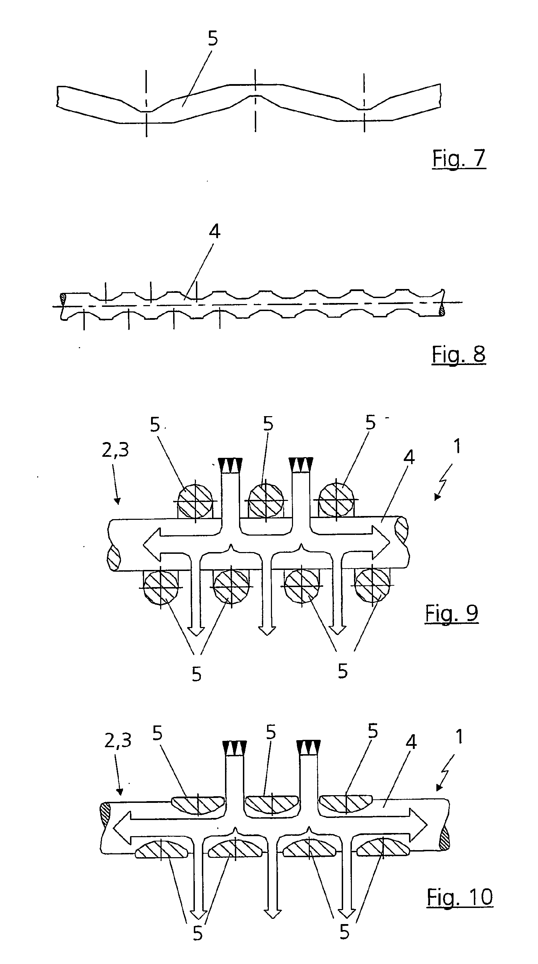

In Fig. 7 ist ein Schussfaden 5 eines wie oben beschrieben gewalzten oder gepressten Gewebes 3 im demontierten Zustand dargestellt, wobei die Verformungen desselben deutlich zu erkennen sind. Einen Kettfaden des gewalzten Gewebes 3 im demontierten Zustand zeigt Fig. 8. Auch hier sind die verformungen deutlich zu erkennen.

Um den Schalldurchgang durch ein ungewalztes Gewebe 3 mit einer Porosität von ca. 50% mit dem Schalldurchgang durch ein gewalztes Gewebe 3 mit einer Porosität von ca. 25% vergleichen zu können, sind in den Figuren 9 und 10 die Schalldurchgänge in beiden Zuständen mittels jeweiliger Pfeile dargestellt. Hierbei ist erkennbar, dass der Schall durch das gewalzte Gewebe 3 stärker verteilt wird als durch das ungewalzte Gewebe 3.

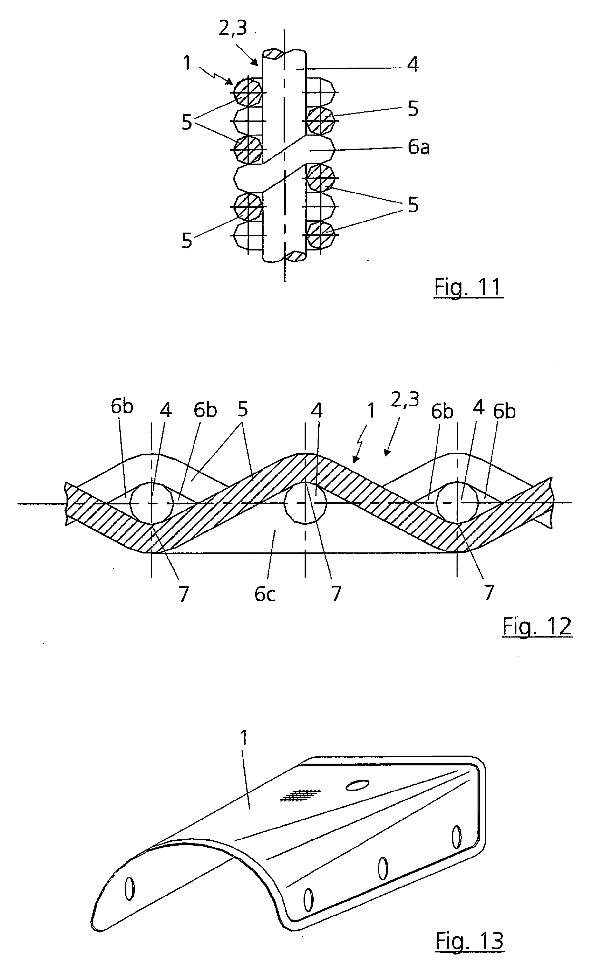

In einer ähnlichen Darstellung wie Fig. 3 zeigt Fig. 11 beispielhaft eine Pore 6a, die in vertikaler Richtung durchströmt wird. Dagegen sind in Fig. 12 eine Kettdraht- oder Horizontalpore 6b sowie ein keilförmiger, den Schall am stärksten absorbierender Porenraum 6c dargestellt.

Wie bereits oben erwähnt, können aus dem plattenförmigen Element 2 bzw. aus der Vorrichtung 1 die unterschiedlichsten werkstücke hergestellt werden. Ein solches Beispiel eines aus der Vorrichtung 1 gebildeten Werkstücks, nämlich eines Abschirmbleches für einen Abgaskrümmer, ist in Fig. 13 dargestellt. Dieses Abschirmblech wird mit einem bestimmten Abstand von dem Abgaskrümmer vorzugsweise an einem nicht mit dem Abgaskrümmer verbundenen Bauteil angebracht, um die Übertragung von Körperschall zu vermeiden.

## Patentansprüche

1. Vorrichtung (1) zur akustischen und thermischen Abschirmung mit einem plattenförmigen Element (2), wobei das plattenförmige Element (2) wenigstens eine Schicht eines Gewebes (3) mit Kettfäden (4) und Schussfäden (5) aufweist, wobei das Gewebe (3) Poren (6) aufweist, und wobei die Kettfäden (4) und die Schussfäden (5) an ihren Berührungspunkten (7) nicht versintert sind,
**dadurch gekennzeichnet, dass** das Gewebe (3) mit den Kettfäden (4) und den Schussfäden (5) aus Metall besteht, und dass das Gewebe (3) eine durch Aufbringen einer derartigen Presskraft mittels Walzen verringerte Dicke aufweist, dass die Kettfäden (4) und die Schußfäden (5) verformt sind und dass die Schussfäden (5) derart in die Kettfäden (4) eingedrungen sind, dass sich die Kettfäden (4) mit den Schussfäden (5) verklammern und dass das Gewebe (3) mechanisch gefügt ist.

2. Vorrichtung nach Anspruch 1,
**dadurch gekenntzeichnet**, **dass** die Kettfäden (4) und/oder die Schussfäden (5) galvanisch behandelt oder lackiert sind.

3. Vorrichtung nach Anspruch 1 oder 2,
**dadurch gekennzeichnet, dass** das Gewebe (3) galvanisch behandelt oder lackiert ist.

4. Vorrichtung nach einem der Ansprüche 1 bis 3,
**dadurch gekennzeichnet, dass** die Kettfäden (5) und die Schussfäden (6) einen Stahlwerkstoff oder einen Aluminiumwerkstoff aufweisen.

5. Verwendung einer Vorrichtung nach einem der Ansprüche 1 bis 4 zur thermischen und akustischen Abschirmung eines Wärme und/oder Schall abstrahlenden Bauteils in einem Motorraum eines Kraftfahrzeugs.

6. Verwendung einer Vorrichtung nach einem der Ansprüche 1 bis 4 im Inneren von Schalldämpfern und/oder Abgasanlagen.

7. Verwendung einer Vorrichtung nach einem der Ansprüche 1 bis 4 als Trägermaterial für Motorabdeckungen.

8. Verwendung einer Vorrichtung nach einem der Ansprüche 1 bis 4 für einen Helmholtz-Resonator.

9. Verfahren zum Herstellen einer Vorrichtung (1) nach Anspruch 1 zur akustischen und thermischen Abschirmung, wobei Kettfäden (4) und Schussfäden (5) zu einem Poren (6) aufweisenden Gewebe (3) verwebt werden, und wobei die Kettfäden (4) und die Schussfäden (5) an ihren Berührungspunkten (7) nicht versintert werden,
**dadurch gekennzeichnet, dass** das Gewebe (3) mit den Kettfäden (4) und den Schussfäden (5) aus Metall besteht, und dass die Dicke des Gewebes (3) durch Aufbringen einer Presskraft mittels Walzen derart verringert wird, dass die Kettfäden (4) und die Schussfäden (5) verformt werden und dass die Schussfäden (5) derart in die Kettfäden (4) eindringen, dass sich die Kettfäden (4) mit den Schussfäden (5) Verklammern und dass das Gewebe (3) mechanisch gefügt wird

10. Verfahren nach Anspruch 9,
**dadurch gekennzeichnet, dass** zum walzen des Gewebes (3) wenigstens eine strukturierte Walze verwendet wird.

11. Verfahren nach Ansprüche 9 oder 10,
**dadurch gekennzeichnet, dass** das Gewebe (3) galvanisch behandelt oder lackiert wird.

12. verfahren nach Anspruch 11,
**dadurch gekennzeichnet, dass** das Gewebe (3) vor der galvanischen Behandlung oder vor dem Lackieren mechanisch umgeformt wird.

## Claims

1. Acoustic and thermal shielding device (1) with a plate-shaped element (2), the plate-shaped element (2) having at least one layer of a woven fabric (3) with warp threads (4) and weft threads (5), the woven fabric (3) having pores (6), and the warp threads (4) and weft threads (5) not being sintered together at their contact points (7), **characterized in that** the woven fabric (3) with the warp threads (4) and the weft threads (5) consists of metal, and that the woven fabric (3) has a thickness reduced by the application of such a pressing force, that the warp threads (4) and the weft threads (5) are deformed and that the weft threads (5) have penetrated into the warp threads (4) in such a way that the warp threads (4) are interlocking with the weft threads (5) and that the woven fabric (3) is mechanically joined.

2. The device as claimed in claim 1, **characterized in that** the warp threads (4) and/or the weft threads (5) are galvanically treated or lacquered.

3. The device as claimed in claim 1 or 2, **characterized in that** the woven fabric (3) is galvanically treated or lacquered.

4. The device as claimed in one of claims 1 to 3, **characterized in that** the warp threads (4) and the weft threads (5) have a steel or an aluminium material.

5. A use of a device as claimed in one of claims 1 to 4 for the thermal and acoustic shielding of a heat- and/or sound-radiating component in an engine space of a motor vehicle.

6. A use of a device as claimed in one of claims 1 to 4 inside mufflers and/or exhaust systems.

7. A use of a device as claimed in one of claims 1 to 4 as carrier material for engine covers.

8. A use of a device as claimed in one of claims 1 to 4 for a Helmholtz resonator.

9. A method for producing an acoustic and thermal shielding device (1) according to claim 1, warp threads (4) and weft threads (5) being interwoven into a woven fabric (3) having pores (6), the warp threads (4) and weft threads (5) not being sintered together at their contact points (7), **characterized in that** the woven fabric (3) with the warp threads (4) and the weft threads (5) consists of metal, and that the thickness of the woven fabric (3) is reduced by applying a pressing force by rolling in such a way that the warp threads (4) and the weft threads (5) are deformed and that the weft threads (5) penetrate in such a way into the warp threads (4) that the warp threads (4) are interlocking with the weft threads (5) and that the woven fabric (3) is mechanically joined.

10. The method as claimed in claim 9, **characterized in that** at least one structured roller is used for rolling the woven fabric (3).

11. The method as claimed in claim 9 or 10, **characterized in that** the woven fabric (3) is galvanically treated or lacquered.

12. The method as claimed in claim 11, **characterized in that** the woven fabric (3) is shaped mechanically before the galvanic treatment or before the lacquering.

## Revendications

1. Dispositif (1) d'isolation acoustique et thermique comprenant un élément (2) en forme de plaque, dans lequel l'élément (2) en forme de plaque comporte au moins une couche d'un tissu (3) comprenant des fils de chaîne (4) et des fils de trame (5), dans lequel le tissu (3) comporte des pores (6), et dans lequel les fils de chaîne (4) et les fils de trame (5) ne sont pas frittés à leurs points de contact (7),
**caractérisé en ce que**
le tissu (3) comprenant les fils de chaîne (4) et les fils de trame (5) est composé de métal, et **en ce que** le tissu (3) présente une épaisseur réduits par application d'une force de pression exercée au moyen de cylindres et qui est telle que les fils de chaîne (4) et les fils de trame (5) sont déformés et que les fils de trame (5) sont encastrés dans les fils de chaîne (4) de telle manière que les fils de chaîne (4) se bloquent avec les fils de trame (5) et que le tissu (3) est lié mécaniquement.

2. Dispositif selon la revendication 1,
**caractérisé en ce que**
les fils de chaîne (4) et/ou les fils de trame (5) sont traités par galvanoplastie et/ou vernis.

3. Dispositif selon la revendication 1 ou 2,
**caractérisé en ce que**
le tissu (3) est traité par galvanoplastie ou verni.

4. Dispositif selon l'une des revendications 1 à 3
**caractérisé en ce que**
les fils de chaîne (4) et les fils de trame (5) possèdent une matière constitutive faite d'acier ou d'aluminium.

5. Utilisation d'un dispositif selon l'une des revendications 1 à 4 pour l'isolation thermique et acoustique d'un composant qui rayonne de la chaleur et/ou du bruit dans le compartiment moteur d'un véhicule automobile.

6. Utilisation d'un dispositif selon l'une des revendications 1 à 4 à l'intérieur de dispositifs insonorisants et/ou de circuits d'échappement.

7. Utilisation d'un dispositif selon l'une des revendications 1 à 4 en qualité de matière portante pour capots de moteurs.

8. Utilisation d'un dispositif selon l'une des revendications 1 à 4 pour un résonateur de Helmholtz.

9. Procédé de fabrication d'un dispositif (1) selon la revendication 1 pour l'isolation acoustique et thermique, dans lequel des fils de chaîne (4) et des fils de trame (5) sont entrelacés en un tissu (3) présentant des pores (6), et dans lequel les fils de chaîne (4) et les fils de trame (5) ne sont pas frittés à leurs points de contact (7),
**caractérisé en ce que**
le tissu (3) comprenant les fils de chaîne (4) et les fils de trame (5) est fait de métal, et **en ce que** l'épaisseur du tissu (3) est réduite par application d'une force de pression exercée au moyen de cylindres et qui est telle que les fils de chaîne (4) et les fils de trame (5) sont déformés et que les fils de trame (5) s'encastrent dans les fils de chaîne (4), de telle manière que les fils de chaîne (4) se bloquent avec les fils de trame (5) et que le tissu (3) est lié mécaniquement.

10. Procédé selon la revendication 9,
**caractérisé en ce que,**
pour cylindrer le tissu (3), on utilise un cylindre structuré.

11. Procédé selon les revendications 9 ou 10,
**caractérisé en ce que**
le tissu (3) est traité par galvanoplastie ou verni.

12. Procédé selon la revendication 11,
**caractérisé en ce que**
le tissu (3) est déformé mécaniquement avant le traitement par galvanoplastie ou avant le vernissage.
